# EUROPÄISCHE PATENTSCHRIFT

(11) **EP 2 417 689 B1**
(45) Veröffentlichungstag und Bekanntmachung des Hinweises auf die Patenterteilung: **30.09.2015**
(21) Anmeldenummer: 10710820.1
(22) Anmeldetag: 11.03.2010
(51) Int. Cl.: G06F 1/30, H02J 9/06

(54) **SCHALTUNG UND VERFAHREN ZUR UNTERBRECHUNGSFREIEN STROMVERSORGUNG ELEKTRONISCHER BAUGRUPPEN**
CIRCUIT AND METHOD FOR AN UNINTERRUPTABLE POWER SUPPLY OF ELECTRONIC MODULES
CIRCUIT ET PROCÉDÉ POUR ALIMENTER SANS INTERRUPTION DES ENSEMBLES ÉLECTRONIQUES

(30) Priorität: 06.04.2009 DE 102009002202
(43) Veröffentlichungstag der Anmeldung: 15.02.2012
(73) Patentinhaber: Beckhoff Automation GmbH, 33415 Verl (DE)
(72) Erfinder: THOME, Andreas, 33449 Langenberg (DE); BECKHOFF, Hans, 33415 Verl (DE)
(74) Vertreter: Patentanwaltskanzlei WILHELM & BECK
(86) Internationale Anmeldenummer: PCT/EP2010/053088
(87) Internationale Veröffentlichungsnummer: WO 2010/115674

(56) Entgegenhaltungen:
- AT-B- 411 412
- US-A- 5 818 125
- US-A1- 2002 049 917
- US-A1- 2008 155 294
- JOSEP M GUERRERO ET AL: "Uninterruptible power supply systems provide protection", IEEE INDUSTRIAL ELECTRONICS MAGAZINE, IEEE, US, Bd. 1, Nr. 1, 1. März 2007 (2007-03-01), Seiten 28-38, XP011184487, ISSN: 1932-4529

## Beschreibung

Die Erfindung betrifft eine Schaltung und ein Verfahren zur unterbrechungsfreien Stromversorgung elektronischer Baugruppen mit einem kapazitiven Energiespeicher, insbesondere zum Einsatz in einem Rechnersystem.

Die ungewollte Unterbrechung der Energieversorgung bei Rechnersystemen, auch dann, wenn sie im Bereich weniger Millisekunden liegt, reicht in der Regel aus, das Funktionieren des Rechnersystems zu stören. Bei Rechnersystemen ist es dabei erforderlich, um einen kontrollierten Abschaltvorgang durchzuführen, bei dem ein Verlust wichtiger Rechnerdaten vermieden wird, den Ausfall der regulären Energieversorgung für den für ein ordnungsgemäßes Herunterfahren des Rechnersystems erforderlichen Zeitraum mit Hilfe einer unterbrechungsfreien Stromversorgung zu überbrücken. In dieser Überbrückungszeit kann dann das Rechnersystem geöffnete Dateien, z. B. sensible Datenbanken, schließen und wichtige Rechnerdaten in nichtflüchtigen Festspeichern sichern.

Unterbrechungsfreie Stromversorgungen, wie sie insbesondere auch bei Rechnersystemen eingesetzt werden, weisen als Energiespeicher in der Regel Akkumulatoren auf. Solche Akkumulatoren besitzen jedoch eine hohe Ladezeit. Darüber hinaus ist bei Akkumulatoren die Stromstärke begrenzt. Bei Rechnersystemen, insbesondere für den Einsatz in der Automatisierungstechnik, ist es bevorzugt, die unterbrechungsfreien Stromversorgungen als Einschubkarte oder als Teil der Hauptplatine des Rechners auszubilden. Akkumulatoren als Energiespeicher haben aber einen hohen Platzbedarf, so dass sich unterbrechungsfreie Stromversorgungen mit Akkumulatoren nur schwer in Rechnersystemen verbauen lassen.

Da bei Rechnersystemen in der Regel nur Unterbrechungen in der regulären Energieversorgung von wenigen Sekunden überbrückt werden müssen, weil diese Haltezeit üblicherweise für ein kontrolliertes Abschalten des Rechnersystems ausreicht, werden zunehmend kapazitive Energiespeicher, mit denen sich für kurze Zeit hohe Stromstärken erzielen lassen und die sich durch ein niedriges Platzerfordernis auszeichnen, eingesetzt. Als kapazitive Energiespeicher zum Einsatz in einer unterbrechungsfreien Stromversorgung bieten sich sogenannte Doppelschichtkondensatoren an, die einen hohen Wirkungsgrad und eine lange Lebensdauer besitzen.

Eine wichtige Anforderung an eine unterbrechungsfreie Stromversorgung mit einem kapazitiven Energiespeicher, vor allem beim Einsatz in Rechnersystemen, ist ein schnelles Anspringen, um im Falle eines Zusammenbruchs der regulären Energieversorgung zuverlässig das kontrollierte Herunterfahren oder Sichern wichtiger Rechnerdaten zu gewährleisten. Bei der Verwendung eines kapazitiven Energiespeichers ist es in der Regel erforderlich, die von Speicherelementen der unterbrechungsfreien Stromversorgung angegebene Spannung an die Versorgungsspannung des Rechners anzupassen. Darüber hinaus ist beim Einsatz eines kapazitiven Energiespeichers zu gewährleisten, dass ein gleichmäßiges Laden bzw. Entladen der einzelnen Elemente stattfindet, um eine Beschädigung bzw. Zerstörung des kapazitiven Energiespeichers zu vermeiden. Ferner muss die unterbrechungsfreie Stromversorgung, insbesondere dann, wenn sie in einem Rechnersystem verwendet wird, so ausgelegt sein, dass ein fehlerhafter Lade- bzw. Entladevorgang bzw. ein defekter kapazitiver Energiespeicher zuverlässig festgestellt werden.

Stand der Technik ist folgenden Dokumenten zu entnehmen: US 2008/155294 A1 (Kikuchi Hideo [JP] et al) 26. Juni 2008 (2008-06-26); US 2002/049917 A1 (Portman Roland F [US] et al) 25. April 2002 (2002-04-25); US 5 818 125 A (Manchester Earl E [US]) 6. Oktober 1998 (1998-10-06); AT 411 412 B (Siemens AG Oesterreich [AT]) 29. Dezember 2003 (2003-12-29).

Aufgabe der vorliegenden Erfindung ist es, eine Schaltung und ein Verfahren zur unterbrechungsfreien Stromversorgung elektronischer Baugruppen mit Hilfe eines kapazitiven Energiespeichers bereitzustellen, die sich einfach an Versorgungsspannungen, gewünschte Haltezeiten und Kommunikationsprotokolle des angeschlossenen, mit Energie zu versorgenden Hauptsystems anpassen lassen und eine sichere und reaktionsschnelle Überbrückung der Unterbrechungen der regulären Energieversorgung gewährleisten.

Diese Aufgabe wird erfindungsgemäß mit einer Schaltung gemäß Anspruch 1 und einem Verfahren gemäß Anspruch 11 gelöst. Bevorzugte Weiterbildungen sind in den abhängigen Ansprüchen angegeben.

Gemäß der Erfindung weist die zwischen eine Energieeinspeisung und eine Last geschaltete Schaltung zur unterbrechungsfreien Stromversorgung einen kapazitiven Energiespeicher auf. Die Energieeinspeisung und der kapazitive Energiespeicher sind dabei mit einem Umschalter verbunden, der ausgelegt ist, dann, wenn bei einer über die Energieeinspeisung angelegten Spannung ein erster vorbestimmter Spannungsabfall auftritt, von einem Versorgen der Last mit Energie über die Energieeinspeisung auf ein Versorgen der Last mit Energie aus dem kapazitiven Energiespeicher umzuschalten. Die Schaltung zur unterbrechungsfreien Stromversorgung weist weiter eine zwischen die Energieeinspeisung und dem kapazitiven Energiespeicher geschaltete Ladeeinrichtung zum Laden des kapazitiven Energiespeichers auf, die mit einer Ladesteuereinrichtung verbunden ist, um den kapazitiven Energiespeicher zu überwachen und bei Feststellen eines Fehlers die Ladeeinrichtung abschaltet. Ferner ist in der Schaltung zur unterbrechungsfreien Stromversorgung eine Spannungsüberwachungseinrichtung angeordnet, die dann, wenn bei der über die Energieeinspeisung angelegten Spannung ein zweiter vorbestimmter Spannungsabfall auftritt, der kleiner als der erste vorbestimmte Spannungsabfall ist, ein Fehlersignal ausgibt. Auf der Grundlage dieses Fehlersignals der Spannungsüberwachungseinrichtung stellt dann eine mit dem kapazitiven Energiespeicher verbundene Entladeeinrichtung dem Umschalter die zum Versorgen der Last notwendige Energie durch Entladen des kapazitiven Energiespeichers zur Verfügung.

Die erfindungsgemäße Schaltung zur unterbrechungsfreien Stromversorgung bzw. die Art und Weise, wie diese Stromversorgung betrieben wird, ermöglichen es, die Schaltung flexibel einzusetzen und durch geringe Variation in der Beschaltung bzw. Bestückung eine Anpassung an unterschiedliche Eingangs- und Versorgungsspannungen, gewünschte Haltezeiträume und verschiedene Protokolle zur externen Kommunikation vorzunehmen.

Gemäß der Erfindung wird dem Umschalter, der von der Versorgung der Last mit Energie über die Energieeinspeisung auf Energie aus dem kapazitiven Energiespeicher umschaltet, wenn die über die Energieeinspeisung angelegte Spannung um den ersten vorbestimmten Wert absinkt, bereits im Vorfeld, dann, wenn die Spannung der Energieeinspeisung unter den zweiten Wert, der kleiner als der erste Wert ist, absinkt, die Energie des kapazitiven Energiespeichers zur Verfügung gestellt, wodurch die Reaktionsgeschwindigkeit der unterbrechungsfreien Stromversorgung wesentlich verkürzt wird und dafür gesorgt wird, dass die Energieversorgung nach dem Zusammenbrechen der regulären Energieversorgung sofort und ohne Schwankungen überbrückt wird. Die Energie des kapazitiven Energiespeichers der unterbrechungsfreien Stromversorgung liegt nämlich zum Zeitpunkt des Umschaltens bereits am Umschalter an und wird nicht erst nach dem Umschalten von dem kapazitiven Energiespeicher abgerufen, was zu Verzögerungen und damit ungewünschten Schwankungen in der Energieversorgung beim Umschalten führen kann.

Die erfindungsgemäße Schaltung zur unterbrechungsfreien Stromversorgung zeichnet sich darüber hinaus durch eine geringe Platzerfordernis und damit die Möglichkeit zur direkten Integration auf einer Hauptplatine zusammen mit einem Netzteil und dem Hauptprozessor aus. Durch die erfindungsgemäße Steuerung des Lade- und Entladevorgangs des kapazitiven Energiespeichers, insbesondere durch das laufende Überwachen des Ladevorgangs durch Auswerten der Spannung des kapazitiven Energiespeichers, wird für ein zuverlässiges Funktionieren und für eine hohe Lebensdauer des kapazitiven Energiespeichers gesorgt.

Gemäß einer bevorzugten Ausführungsform setzt sich der kapazitive Energiespeicher aus mehreren Speicherzellen zusammen, wobei den Speicherzellen eine Ausgleichschaltung zum gleichmäßigen Laden vorgeschaltet ist, und die Ladesteuereinrichtung die Spannung der einzelnen Speicherzellen vergleicht, um bei Feststellen einer zu starken Abweichung die Ladeeinrichtung abzuschalten. Mit dieser Vorgehensweise wird gewährleistet, dass an allen kapazitiven Speicherelementen die gleiche Spannung angelegt wird und damit die Speicherelemente auf ihre volle Kapazität aufgeladen werden. Der Ladevorgang wird dabei überwacht und abgeschaltet, wenn es zu einem starken Auseinanderdriften der Spannung der einzelnen kapazitiven Speicherelemente kommt, wodurch eine Beschädigung der kapazitiven Speicherelemente vermieden wird.

Gemäß einer weiteren bevorzugten Ausführungsform ist die Ladesteuereinrichtung so ausgelegt, dass einzelne Speicherzellen zu- oder abgeschaltet werden können. Dadurch besteht die Möglichkeit, die kapazitiven Speicherelemente z. B. dann, wenn hier eine Beschädigung aufgetreten ist, im laufenden Betrieb auszutauschen bzw. die unterbrechungsfreie Stromversorgung mit weiteren Speicherelementen zum Vergrößern der Speicherfähigkeit und damit der Haltezeit nachzurüsten.

Gemäß einer weiteren bevorzugten Ausführungsform ist die Ladesteuereinrichtung so ausgelegt, dass sie den Gesamtladezustand des kapazitiven Energiespeichers der unterbrechungsfreien Stromversorgung fortlaufend durch Vergleichen der Spannung der kapazitiven Energiespeicher mit einer Versorgungsspannung der Ladesteuereinrichtung überwacht. Die unterbrechungsfreie Stromversorgung kann damit fortlaufend Informationen über den Zustand der Speicherelemente bzw. über die Haltezeitdauer ausgeben. Die Vorgehensweise, die Spannung der kapazitiven Speicherelemente mit der Versorgungsspannung der Ladesteuereinrichtung als Referenzspannung zu vergleichen, sorgt für eine einfache und zuverlässige Auswertung.

Gemäß einer weiteren bevorzugten Ausführungsform weist die Ladeeinrichtung einen Strom- und Spannungsbegrenzer und bevorzugt auch einen Leistungsaufnahmebegrenzer auf. Hierdurch wird ein schonender Ladevorgang und damit eine lange Lebensdauer des kapazitiven Energiespeichers gewährleistet. Die Begrenzung der Leistungsaufnahme schützt ferner die Energieeinspeisung zuverlässig vor Überlast und damit die nachgeschaltete Last vor unerwünschten Schwankungen in der Energieversorgung.

Gemäß einer weiteren bevorzugten Ausführungsform weist die Ladeeinrichtung eine Blockiereinrichtung zum Verhindern einer Rückspeisung von Energie in die Energieeinspeisung auf. Hierdurch wird ein beschleunigter Ladevorgang erreicht, da Ladeverluste durch Rückspeisung von Energie aus dem kapazitiven Energiespeicher in die Energiespeisung vermieden werden.

Gemäß einer weiteren bevorzugten Ausführungsform ist die Entladeeinrichtung als Spannungswandler zum Anpassen der vom kapazitiven Energiespeicher gelieferten Spannung an die Versorgungsspannung der Last ausgebildet. Dies ermöglicht es, die unterbrechungsfreie Spannungsversorgung einfach und schnell an die erforderliche Versorgungsspannung der nachgeschalteten Last anzupassen. Bevorzugt ist weiterhin, dass die Entladeeinrichtung sich im Normalbetrieb in einem Standby-Modus oder Aus-Modus befindet, der bei Anlegen eines Fehlersignals der Spannungsüberwachungseinrichtung, also dann, wenn die über die Energieeinspeisung angelegte Spannung um den ersten Wert, der kleiner ist als der Schwellenwert des Umschalters absinkt, in einen Aktiv-Modus hochzuschalten. Diese Schaltungsauslegung gewährleistet eine schnelle Reaktion der Entladeeinrichtung auf eine Unterbrechung der regulären Energieversorgung und damit ein schnelles Anlegen der Energie der kapazitiven Energiespeicher an den Umschalter. Der Standby-Modus bzw. Aus-Modus sorgt ferner dafür, dass im Normalbetrieb bei funktionierender regulärer Energieversorgung nur wenig Energie vom kapazitiven Energiespeicher abfließt, wodurch ein vorzeitiges Entladen und dadurch ein erhöhter Strombedarf durch unnötige Aufladevorgänge verhindert wird. Gleichzeitig wird so auch eine Verlängerung der Lebensdauer des kapazitiven Energiespeichers erreicht, da kapazitive Energiespeicher in der Regel nach einer bestimmten Anzahl von Lade- und Entladevorgängen in ihrer Speicherfähigkeit nachlassen.

Gemäß einer weiteren bevorzugten Ausführungsform weist der Umschalter eine Blockiereinrichtung zum Verhindern eines Rückspeisens von Energie aus dem kapazitiven Energiespeicher in die Energieeinspeisung auf. Hierdurch wird ein rasches Entladen des kapazitiven Energiespeichers verhindert.

Die Erfindung wird im Folgenden anhand der beigefügten Zeichnungen näher erläutert. Es zeigen:
Figur 1 ein Blockschaltbild einer erfindungsgemäßen unterbrechungsfreien Stromversorgung; und
Figur 2 ein Ablaufdiagramm einer Ladesteuereinrichtung zur Überwachung von kapazitiven Speicherelementen bzw. deren Ladeeinrichtung.

Unterbrechungsfreie Stromversorgungen werden eingesetzt, um bei Störungen im Stromnetz die Energieversorgung kritischer elektrischer Lasten sicherzustellen. So sind z. B. bei Rechnersystemen, insbesondere zur Steuerung von Maschinen und Anlagen im Rahmen der Automatisierungstechnik, unterbrechungsfreie Stromversorgungen vorgesehen, um bei Unterbrechungen in der Stromversorgung Datenverluste zu vermeiden. Bereits ein Stromausfall im Millisekundenbereich bei Rechnersystemen kann zu einem Absturz des Rechnersystems führen. Um Rechnersystemen bei einem Stromausfall ausreichend Zeit für ein kontrolliertes Herunterfahren zu geben, bei dem wichtige Rechnerdaten in nichtflüchtigen Festspeichern gesichert werden können, wird mit Hilfe einer unterbrechungsfreien Stromversorgung die Energieversorgung schwankungsfrei aufrecht erhalten.

Die erfindungsgemäße unterbrechungsfreie Stromversorgung wird am Beispiel eines Einsatzes in einem Rechnersystem und dabei als Bestandteil einer Hauptplatine mit einem Hauptprozessor erläutert. Die Überbrückungszeit, die für ein kontrolliertes Herunterfahren bei Rechnersystemen erforderlich ist, liegt in der Regel im Sekundenbereich, so dass die erfindungsgemäße unterbrechungsfreie Stromversorgung für eine entsprechende Haltezeit ausgelegt ist. Es besteht jedoch die Möglichkeit, die erfindungsgemäße unterbrechungsfreie Stromversorgung statt für ein Rechnersystem auch für andere nachgeschaltete Lasten mit dafür erforderlichen längeren bzw. kürzeren Haltezeiten einzusetzen.

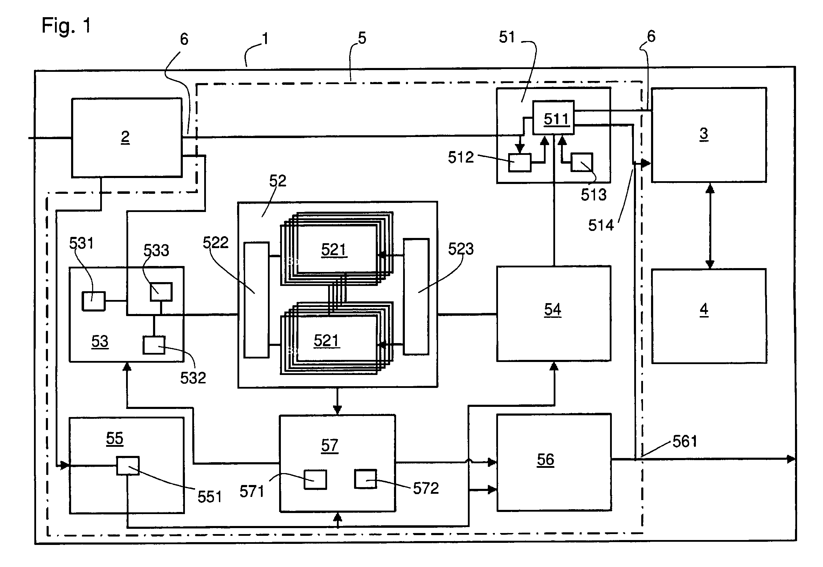

Figur 1 zeigt eine Hauptplatine 1, die mit einem Netzteil 2, einem Hauptprozessor 3, einem Speicher 4 und einer unterbrechungsfreien Stromversorgung 5 bestückt ist. Das Netzteil 2 beliefert dabei über eine Versorgungsleitung 6, in die die unterbrechungsfreie Stromversorgung 5 zwischengeschaltet ist, den Hauptprozessor 3 mit Energie. Die in Figur 1 gezeigte unterbrechungsfreie Stromversorgung 5 ist ausgelegt, den nachgeschalteten Hauptprozessor 3 für einen kurzen Zeitraum von einigen Sekunden nach Ausfall der regulären Spannungsversorgung durch das Netzteil 2 am Leben zu erhalten, damit der Hauptprozessor 3 kontrolliert herunterfahren und dabei wichtige Prozessordaten z. B. aus einem flüchtigen Arbeitsspeicher in den nichtflüchtigen Speicher 4 sichern kann. Auf der Hauptplatine 1 können weitere Bauteile, z. B. ein BIOS-Chip, Schnittstellenbausteine, sowie Erweiterungskarten wie eine Graphik-, eine Sound- oder eine Netzwerkkarte montiert sein. Diese weiteren Bauteile sind in der Regel ähnlich dem Hauptprozessor 3 über die unterbrechungsfreie Stromversorgung 5 zur Energieversorgung mit dem Netzteil 2 verbunden. Es besteht jedoch auch die Möglichkeit, dann, wenn es sich bei den weiteren Bauteilen um keine kritischen Lasten handelt, deren Energieversorgung bei Störung im Stromnetz schwankungsfrei gewährleistet sein muss, diese unter Umgehung der unterbrechungsfreien Stromversorgung direkt an das Netzteil 2 anzuschließen.

Das Netzteil 2 kann alternativ statt auf der Hauptplatine 1 auch als separates Bauteil ausgeführt sein. Die Leistung des Netzteils 2 liegt bei Rechnern üblicherweise zwischen 200 W und 600 W, kann jedoch je nach Anforderung auch wesentlich höher liegen. Das Netzteil 2 kann ferner so ausgelegt sein, dass es sich mit unterschiedlicher Spannung betreiben lässt. Die Umschaltung zwischen den verschiedenen Spannungen kann dabei manuell oder automatisch erfolgen. So lassen sich Rechnernetzteile z. B. mit einer Netzwechselspannung zwischen 100 V und 250 V betreiben oder z. B. mit einer 24 V Gleichspannung. Das Netzteil 2 ist ferner in der Regel als Wechselstrom/Gleichstromwandler ausgelegt und kann verschiedene Ausgangsspannungen, z. B. 12 V für Graphikkarten und Laufwerke, 5 V für den Hauptprozessor und externe Anschlüsse und 3,3 V für den Speicher liefern.

In der Versorgungsleitung 6 zwischen das Netzteil 2 und den nachgeordneten versorgungskritischen Lasten, in Figur 1 dem Hauptprozessor 3, ist ein Umschalter 51 der unterbrechungsfreien Stromversorgung angeordnet. Der Umschalter 51 weist einen Leistungsschalter 512, der im Normalbetrieb bei störungsfreier Stromversorgung durch das Netzteil 2 die Leistung des Netzteils auf den nachgeordneten Hauptprozessor 3 durchschaltet, auf. Wenn jedoch die gewünschte Versorgungsspannung des Hauptprozessors 3 auf der Versorgungsleitung 6 vom Netzteil 2 unter einen vorbestimmten Schwellenwert abfällt, schaltet der Umschalter 51 auf eine Energieversorgung des Hauptprozessors 3 durch die unterbrechungsfreie Stromversorgung 5 um.

Der Umschalter 51 weist hierzu einen Vergleicher 512 auf, der die Spannung auf der vom Netzteil 2 kommenden Versorgungsleitung 6 abtastet und mit dem eingespeicherten Schwellenwert vergleicht und bei Absinken der Versorgungsspannung unter den Schwellenwert ein entsprechendes Fehlersignal auslöst, das dann den Leistungsschalter 511 im Umschalter 51 veranlasst, von einer Energieversorgungdurch das Netzteil 2 auf eine Energieversorgung durch die unterbrechungsfreie Stromversorgung 5 umzuschalten. Der Vergleicher 512 im Umschalter 51 ist dabei so ausgelegt, dass er, sobald die vom Netzteil 2 gelieferte Versorgungsspannung den vorgegebenen Schwellenwert wieder überschreitet, von der Energieversorgung des Hauptprozessors 3 durch die unterbrechungsfreie Stromversorgung 5 auf die Energieversorgung durch das Netzteil 2 zurückschaltet.

Der Umschalter 51 weist ferner eine Blockiereinrichtung 513 auf, die eine Einspeisung von Energie aus der unterbrechungsfreien Stromversorgung 5 in das Netzteil 2 und damit in das Stromnetz verhindert. Mit dieser rückspeisefesten Auslegung des Umschalters 51 wird gewährleistet, dass ein Leistungsverlust bei der Versorgung der Last über die unterbrechungsfreie Stromversorgung verhindert wird. Der Leistungsschalter 511 im Umschalter 51 generiert weiterhin ein Statussignal, das der angeschlossenen Last, in Figur 1 dem Hauptprozessor 3 über eine Datenschnittstelle 514 anzeigt, ob die Energieversorgung über das Netzteil 2 oder durch die unterbrechungsfreie Stromversorgung 5 erfolgt.

Zentrales Bauelement der unterbrechungsfreien Stromversorgung 5 ist ein kapazitiver Energiespeicher 52. Kapazitive Energiespeicher zeichnen sich durch eine geringe Selbstentladung und eine Energieeinspeicherung ohne chemischen Umwandlungsprozess aus, wodurch sich ein hoher Wirkungsgrad und eine lange Lebensdauer erreichen lassen. Der kapazitive Energiespeicher 52 setzt sich vorzugweise aus einer Kombination von kapazitiven Speicherzellen 521 zusammen. Geeignet als kapazitive Speicherzellen sind dabei vor allem sogenannte Doppelschichtkondensatoren, die sich durch einen geringen Platzbedarf, eine hohe Lebensdauer und eine geringe Selbstentladung auszeichnen. Durch geeignete Verschaltung der kapazitiven Speicherzellen 521 in Form von Reihen- und/oder Parallelschaltungen, wie in Figur 1 schematisch dargestellt, besteht die Möglichkeit, die gewünschten Leistungsparameter, insbesondere die Haltezeit und die Leistungsabgabe einzustellen. Es können so Haltezeiten zwischen mehreren Sekunden, wie sie in der Regel für eine unterbrechungsfreie Stromversorgung zum Überbrücken eines Stromausfalls bei dem in Figur 1 gezeigten Hauptprozessor 3 ausreichen, damit dieser kontrolliert abgeschaltet werden kann, und mehreren 10 Minuten, um z. B. in Automatisierungssystemen die Versorgung kritischer elektrischer Lasten zu gewährleisten, eingestellt werden.

Der Kombination aus kapazitiven Speicherzellen 521 ist eine Ausgleichsschaltung 522 vorgeschaltet, die für ein gleichmäßiges Laden der kapazitiven Speicherzellen 521 sorgt, also gewährleistet, dass an allen kapazitiven Speicherzellen 521 beim Laden die gleiche Spannung angelegt wird, um die kapazitive Speicherzelle vollständig aufladen zu können. Beim Anlegen unterschiedlicher Ladespannungen an die kapazitiven Speicherzellen 521 besteht die Gefahr, dass einzelne Speicherzellen überladen werden, was dann zu einer Zerstörung dieser Speicherzelle führen kann. Die Ausgleichschaltung 522 ist dabei so ausgelegt, dass sie die in der Regel herstellungsbedingt leicht unterschiedlichen Innenwiderstände der Speicherzellen 521 ausgleicht, um für eine identische Ladespannung an den einzelnen Speicherzellen zu sorgen.

Der kapazitive Energiespeicher 52 weist ferner eine Tauscheinrichtung 523, im Weiteren auch Hot-Plug-Schaltung genannt, auf, mit der ein Wechseln bzw. ein Zu- oder Abschalten einzelner kapazitiver Speicherzellen 521 im Normalbetrieb der unterbrechungsfreien Stromversorgung, dann wenn die Energieversorgung über das Netzteil erfolgt, möglich ist. Die Hot-Plug-Schaltung 523 ist daher insbesondere geeignet zum Einsatz in einem kapazitiven Energiespeicher 52 mit parallel geschalteten Speicherzellen. Mit der Hot-Plug-Schaltung 523 können dann einzelne Speicherzellenäste abgetrennt bzw. hinzugefügt werden. Die Hot-Plug-Schaltung 523 ermöglicht es so, auch im laufenden Betrieb, z. B. dann, wenn die unterbrechungsfreie Stormversorgung im Rahmen eines Automatisierungssystems als Steuerrechner eingesetzt wird, fehlerhafte kapazitive Speicherzellen auszutauschen oder auch die unterbrechungsfreie Stromversorgung flexibel an veränderte Einsatzbedingungen, z. B. verlängerte Haltezeit anzupassen.

Dem kapazitiven Energiespeicher 52 in der unterbrechungsfreien Stromversorgung vorgeschaltet ist eine Ladeeinrichtung 53 zum Laden der kapazitiven Speicherzellen des Energiespeichers 52 über das Netzteil 2. Die Ladeeinrichtung 53 ist vorzugsweise ein rückspeisefester Spannungs- und Stromregler, der die Versorgungsspannung des Netzteils 2 an die Ladespannung der kapazitiven Speicherzelle 521 anpasst. Der Spannungs- und Stromregler 53 ist dabei als sogenannter Step-Up-Regler dann, wenn die Versorgungsspannung des Netzteils 2 zum Laden der kapazitiven Speicherzelle 521 angehoben werden muss, als Step-Down-Regler dann, wenn die Versorgungsspannung des Netzteils 2 höher ist als die Ladespannung der kapazitiven Speicherzellen 521 oder als Sepic-Wandler dann, wenn die Versorgungsspannung des Netzteils 2 sowohl größer als auch kleiner als die Ladespannung der kapazitiven Speicherzellen 521 sein kann, ausgelegt. Durch diese Spannungsanpassung der Versorgungsspannung an die Ladespannung des kapazitiven Energiespeichers mit Hilfe der Ladeeinrichtung 53 kann die unterbrechungsfreie Stromversorgung flexibel und einfach mit unterschiedlichen Versorgungsspannungen der Energieeinspeisung betrieben werden.

Die rückspeisefeste Auslegung der Ladeeinrichtung 53 wird mit einer Blockiereinrichtung 531 erreicht, die verhindert, dass Energie aus dem kapazitiven Energiespeicher 52 in das Netzteil 2 bzw. die Energieeinspeisung zurückfließt. Die Ladeeinrichtung 53 verfügt darüber hinaus über einen Spannungs- und Strombegrenzer 532, um einen schonenden Ladevorgang des kapazitiven Energiespeichers 52 zu gewährleisten, wodurch eine verlängerte Lebensdauer des kapazitiven Energiespeichers erreicht wird. Ferner ist in der Ladeeinrichtung 53 vorzugsweise auch ein Leistungsaufnahmebegrenzer 533 vorgesehen, der das versorgende Netzteil 2 vor Überlast und damit die nachgeschaltete Last vor Instabilitäten in der Energieversorgung schützt.

Zwischen dem kapazitiven Energiespeicher 52 und dem Umschalter 51 ist weiterhin eine Entladeeinrichtung 54 angeordnet, die wiederum als Step-Up, Step-Down oder sepicfähiger Spannungswandler ausgelegt ist, je nachdem, ob die Versorgungsspannung für die nachgeschaltete Last, in Figur 1 den Hauptprozessor 3, dann, wenn die Last über die unterbrechungsfreie Stromversorgung versorgt wird, höher oder niedriger ist als die vom kapazitiven Energiespeicher gelieferte Spannung oder die vom kapazitiven Energiespeicher gelieferte Spannung sowohl größer als auch kleiner ist als die Versorgungsspannung der Last.

Die Entladeeinrichtung 54 legt die vom kapazitiven Energiespeicher 52 gelieferte Spannung am Leistungsschalter 511 des Umschalters 51 an, der diese Spannung dann nach dem Umschalten von der Energieversorgung über das Netzteil 2 auf die unterbrechungsfreie Stromversorgung 5 auf die nachgeordnete Last durchschaltet und die Last so mit Energie beliefert, bis der kapazitive Energiespeicher 52 entladen ist. Die Entladeeinrichtung 54 ist dabei so ausgelegt, dass im Normalbetrieb dann, wenn die Last über das Netzteil 2 versorgt wird und die unterbrechungsfreie Stromversorgung 5 nicht aktiv ist, die Entladeeinrichtung 54 ausgeschaltet ist oder sich im Standby-Betrieb befindet, wodurch erreicht wird, dass die Entladeeinrichtung 54 im Normalbetrieb so wenig Energie wie möglich vom kapazitiven Energiespeicher 52 abzieht. Damit wird ein unerwünschtes ständiges Nachladen des kapazitiven Energiespeichers verhindert, was für eine verlängerte Lebensdauer des kapazitiven Energiespeichers 52 sorgt, da die kapazitiven Energiespeicher in der Regel nur eine begrenzte Anzahl von Lade- und Entladezyklen aushalten.

Um eine hohe Reaktionsgeschwindigkeit der unterbrechungsfreien Stromversorgung beim Zusammenbruch der regulären Energieversorgung über das Netzteil 2 zu erreichen, wie sie insbesondere beim Einsatz als Energieversorgungsüberbrückung für einen Hauptprozessor 3 erforderlich ist, bei dem schon geringe Schwankungen in der Spannungsversorgung zu einem Absturz und damit einem Datenverlust führen können, ist eine Spannungsüberwachungseinrichtung 55 vorgesehen, die die Spannung auf der Versorgungsleitung 6 bzw. im Netzteil 2 permanent überwacht. Die Spannungsüberwachungseinrichtung 55 greift dabei die angelegte Versorgungsspannung in der Regel vor dem Netzteil 2 direkt an der Energieeinspeisung ab. Ist die Versorgungsspannung allerdings eine Wechselspannung, die im Netzteil 2 in eine Gleichspannung umgewandelt wird, wird die Versorgungsspannung hinter dem Netzteil 2 überwacht. Ist kein Netzteil vorhanden und wird die Versorgungsspannung für die nachgeordnete Last von außen eingespeist, wird die Versorgungsspannung am Einspeisungspunkt gemessen.

Die Spannungsüberwachungseinrichtung 55 weist einen Vergleicher 551 auf, der die gemessene Versorgungsspannung mit einem Schwellenwert vergleicht und ein Fehlersignal auslöst, wenn der Spannungswert unter diesen Schwellenwert sinkt. Dieser zweite Schwellenwert weist eine geringere Differenz zum Sollwert auf als der dem Umschalter 51 vorgegebene erste Schwellenwert, so dass die Spannungsüberwachungseinrichtung 55 bereits einen Fehler in der regulären Energieversorgung signalisiert, bevor der Umschalter 51 von der vom Netzteil gelieferten Versorgungsspannung auf die unterbrechungsfreie Stromversorgung umschaltet. Alternativ zu einem Schwellenwertvergleich kann der Vergleicher 551 der Spannungsüberwachungseinrichtung 55 auch ausgelegt sein, dann, wenn ein Absinken der Versorgungsspannung festgestellt wird, ein Fehlersignal auszulösen, wobei die Spannungsüberwachungseinrichtung 55 das Fehlersignal bereits abgesetzt hat, bevor das vom Umschalter festgestellte Absinken der Versorgungsspannung zum Umschaltvorgang von der normalen Energieversorgung auf die unterbrechungsfreie Stromversorgung geführt hat.

Die Spannungsüberwachungseinrichtung 55 legt das Fehlersignal an der Entladeeinrichtung 54 an, worauf diese aus dem Aus- bzw. Standby-Modus in den Aktiv-Modus übergeht und die vom kapazitiven Energiespeicher 52 gelieferte Spannung sofort an den Umschalter 51 anlegt. Diese Vorgehensweise gewährleistet, dass die Spannung des kapazitiven Energiespeichers 52 der unterbrechungsfreien Stromversorgung schon vor dem eigentlichen Umschaltvorgang von der regulären Energieversorgung auf die unterbrechungsfreie Stromversorgung am Umschalter ansteht und somit ein schwankungsfreier Übergang beim Umschalten gewährleistet ist, der dann für eine zuverlässige Energieversorgung der nachgeordneten Last sorgt.

Die unterbrechungsfreie Stromversorgung weist ferner eine Statusüberwachungseinrichtung 56, vorzugsweise einen Mikrocontroller, auf, der mit der Spannungsüberwachungseinrichtung 55 verbunden ist. Die Spannungsüberwachungseinrichtung 55 übermittelt an die Statusüberwachungseinrichtung 56 das Fehlersignal dann, wenn eine Störung in der normalen Energieversorgung festgestellt wird. Die Statusüberwachungseinrichtung 56 dient zur externen Kommunikation der unterbrechungsfreien Stromversorgung und weist dazu, wie in Figur 1 gezeigt, eine entsprechende Datenschnittstelle 561 zum Abgriff von außen auf. Insbesondere verbindet die Statusüberwachungseinrichtung 56 aber die unterbrechungsfreie Stromversorgung mit den nachgeordneten Lasten, hier dem Hauptprozessor 3, um der Last bereits frühzeitig einen bevorstehenden Zusammenbruch der regulären Energieversorgung zu signalisieren. Die Statusüberwachungseinrichtung 56 kann darüber hinaus über weitere Funktionen, wie einen Gesamtbetriebsstundenzähler, einen Betriebsstundenzähler, eine Temperaturmesseinrichtung etc. verfügen, um eine Funktionsüberwachung der unterbrechungsfreien Stromversorgung durchzuführen. Insbesondere besteht die Möglichkeit, die Statusüberwachungseinrichtung 56 so auszulegen, dass Umgebungsvariablen wie die Betriebstemperatur auf der Hauptplatine im Falle des Aktivierens der unterbrechungsfreien Stromversorgung ermittelt werden, um diese Daten dann für ein nachträgliches Auslesen über die Schnittstelle nach außen in einem Speicher zur Verfügung zu stellen, um daraus dann z. B. den Grund für den Zusammenbruch der regulären Energieversorgung ermitteln zu können.

Die Statusüberwachungseinrichtung 56 kann ferner ausgelegt sein, über eine entsprechende Steuereinrichtung dann, wenn ein Fehlersignal von der Spannungsüberwachungseinrichtung 55 ansteht, einzelne nachgeschaltete Lastkomponenten nach einem vorgesehenen Zeitplan abzuschalten, um so zu gewährleisten, dass nur versorgungskritische Lasten beim Aktivieren der unterbrechungsfreien Stromversorgung versorgt werden, um eine unnötige Belastung der unterbrechungsfreien Stromversorgung zu vermeiden und längere Haltezeiten zu erreichen. Durch das vorzeitige Signalisieren eines Zusammenbruchs der regulären Energieversorgung, bevor auf die unterbrechungsfreie Stromversorgung umgeschaltet wird, kann der Hauptprozessor 3 bereits vorzeitig mit einem kontrollierten Herunterfahren zur Sicherung wichtiger Daten im Festspeicher 4 beginnen, wodurch eine erhöhte Sicherheit gegen Datenverluste erreicht wird.

Die unterbrechungsfreie Stromversorgung 5 weist ferner eine mit dem kapazitiven Energiespeicher 52 und der Ladeeinrichtung 53 verbundene Ladesteuereinrichtung 57 auf. Die Ladesteuereinrichtung 57, vorzugsweise ein Mikrocontroller, ist ausgelegt, den Ladezustand des kapazitiven Energiespeichers 52 durch Auswerten der Spannung des kapazitiven Energiespeichers zu überwachen und bei Feststellen eines Fehlers die Ladeeinrichtung 53 abzuschalten. Wenn die Ladesteuereinrichtung 57 dabei an einer Speicherzelle 521 des kapazitiven Energiespeichers 52 einen Spannungsabfall registriert, also die Spannung an dieser Speicherzelle unter die Spannung an den weiteren Speicherzellen fällt und es somit zu einer Asymmetrie der an den einzelnen Speicherzellen 521 anliegenden Spannungen kommt, sorgt die Ladesteuereinrichtung 57 dafür, dass der weitere Ladevorgang über die Ladeeinrichtung 53 beendet wird, um ein Zerstören der anderen Speicherzellen durch Überladen zu verhindern.

Die Ladesteuereinrichtung 57 ist ferner mit der Statusüberwachungseinrichtung 56 verbunden, um der Statusüberwachungseinrichtung 56 fortlaufend Informationen über den Zustand des kapazitiven Energiespeichers 52 und deren Speicherzellen und dabei insbesondere über den Ladezustand der Speicherzellen 521 zu übermitteln. Die Statusüberwachungseinrichtung 56 kann die von der Ladesteuereinrichtung 57 übertragene Information dann wiederum z. B. an den Hauptprozessor signalisieren, um den Hauptprozessor über die Funktionsfähigkeit bzw. Leistungsfähigkeit der unterbrechungsfreien Stromversorgung auf dem Laufenden zu halten, damit der Hauptprozessor dann entsprechend reagieren kann.

Die Ladesteuereinrichtung 57 kann sowohl eine Spannungs- bzw. Ladekapazitätsdifferenzmessung zwischen den einzelnen Speicherzellen 521 des kapazitiven Energiespeichers 51 ausführen, um festzustellen, ob alle Speicherzellen korrekt funktionieren bzw. welche Speicherzelle defekt ist, als auch eine Absolutmessung durchführen, um den Gesamtladezustand des kapazitiven Energiespeichers 51 zu ermitteln. Für diese Absolutmessung wird als Referenz vorzugsweise die Versorgungsspannung der Ladesteuereinrichtung herangezogen, die über einen Vergleicher 571 zusätzlich überwacht wird. Ferner wird die Ladesteuereinrichtung 57 von der Spannungsüberwachungseinrichtung 55 mit dem Fehlersignal versorgt, um die Ladeeinrichtung 53 dann abzuschalten.

Die Ladesteuereinrichtung 57 verfügt zur Eigensicherung ferner über eine interne Überwachungseinrichtung 572, die im Fehlerfall, dann, wenn ein Funktionsfehler in der Ladesteuereinrichtung auftritt, die Ladesteuereinrichtung zurücksetzt, um die Funktionsüberwachung des kapazitiven Energiespeichers 52 dann wiederum neu zu starten.

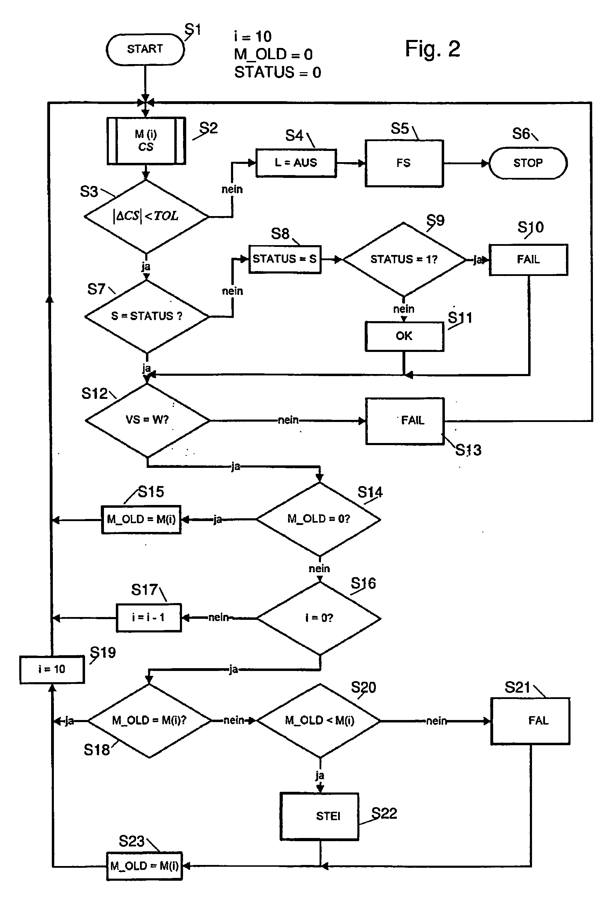

Figur 2 zeigt einen Ablaufplan für die von der Ladesteuereinrichtung 57 durchgeführte Funktionsüberwachung. Ein Überwachungszyklus dauert dabei in der Regel weniger als eine Millisekunde. Die interne Überwachungseinrichtung 572 der Ladesteuereinrichtung 57 ist so ausgelegt, dass ein Reset der Ladesteuereinrichtung 57 dann erfolgt, wenn für eine bestimmte Zeit, z. B. 20ms, ein normalerweise regelmäßig erzeugtes internes Signal nicht ausgelöst wurde. Ein solcher Reset kann z.B. durch einen Absturz oder eine Fehlfunktion der internen Software der Ladesteuerungseinreichung 57 ausgelöst werden.

Bei Start der Funktionsüberwachung durch die Ladesteuereinrichtung wird in einem ersten Schritt S1 ein Anfangszustand definiert. Hierbei wird die Anzahl der Messschleifen, im in Figur 2 gezeigten Ausführungsbeispiel i = 10, und damit die Länge des Überwachungszyklus festgelegt. Ferner wird ein Ausgangsspannungswert (M_OLD = 0) festgesetzt und ein Normalbetrieb der regulären Energieversorgung (STATUS = 0) angenommen.

Im Schritt S2 wird von der Ladesteuereinrichtung die Gesamtspannung M(i) des kapazitiven Energiespeichers und die Ladung CS der einzelnen Speicherzellen ermittelt. Im Schritt S3 wird dann mit Hilfe einer Differenzberechnung festgestellt, ob die gemessenen Ladungen der einzelnen Speicherzellen etwa gleich sind bzw. in einem vorgegebenen Toleranzbereich TOL liegt. Falls das Ergebnis "nein" lautet, wird im Schritt S4 die Ladeeinrichtung abgeschaltet und im Schritt S5 vorzugsweise der Statusüberwachungseinrichtung ein Funktionsfehler FAIL der Speicherzellen signalisiert. Im Schritt S6 wird dann die Überwachung beendet.

Falls das Ergebnis der Differenzberechnung mit "ja" ausfällt, wird im Schritt S7 der Status der regulären Energieversorgung ermittelt. Hierzu wird das von der Spannungsüberwachungseinrichtung gelieferte Signal, das den Normalbetrieb (S = 0) oder den Zusammenbruch der regulären Spannungsversorgung (S = 1) signalisiert, mit dem in der Ladeeinrichtung gespeicherten Statuswert verglichen. Falls das Vergleichsergebnis "nein" ist, wird im Schritt S8 der in der Ladesteuereinrichtung abgespeicherte Statuswert STATUS auf den von der Spannungsüberwachungseinrichtung übertragenen Statuswert gesetzt. Im Schritt S9 wird dann geprüft, ob dieser Statuswert einen Zusammenbruch der regulären Energieversorgung (STATUS = 1) signalisiert. Falls das Ergebnis "ja" lautet, wird im Schritt S10 vorzugsweise der Statusüberwachungseinrichtung ein Fehlersignal FAIL signalisiert. Falls das Ergebnis "nein" lautet, wird dagegen der Normalbetrieb OK im Schritt S11 angezeigt.

Nach Schritt S10 oder Schritt S11 wird im Schritt S12 mit Hilfe des Vergleichers der Ladesteuereinrichtung überprüft, ob die vorgegebene Versorgungsspannung VS anliegt. Der Ablauf geht direkt zum Schritt S12 über, falls das Ergebnis des Statusvergleiches der regulären Energieversorgung mit dem vorgespeicherten Wert im Schritt S7 Übereinstimmung anzeigt. Falls die Versorgungsspannung VS der Ladesteuereinrichtung nicht den gewünschten Wert W besitzt, wird dies im Schritt S13 mit einem Signal FAIL vorzugsweise der Statusüberwachungseinrichtung signalisiert und dann mit Schritt S2 fortgefahren.

Wenn die gewünschte Versorgungsspannung VS der Ladesteuereinrichtung festgestellt wird, wird im Schritt S14 geprüft, ob der in der Ladesteuereinrichtung vorgespeicherte Spannungswert M_OLD bei 0, also beim Reset-Anfangswert, liegt. Falls "ja", wird der Spannungswert M_OLD auf den im Schritt S2 gemessenen Spannungswert M(i) im Schritt S15 gesetzt und dann mit Schritt S2 fortgefahren.

Falls das Ergebnis "nein" lautet, also der in der Ladesteuereinrichtung gespeicherte Spannungswert M_OLD nicht dem Reset-Anfangswert 0 entspricht, wird im Schritt S16 geprüft, ob die vorgegebene Anzahl der Messschleifen durchgelaufen ist, also die Schleifenvariable auf 0 steht. Falls das Ergebnis "nein" lautet, wird im Schritt S17 die Schleifenvariable i um 1 heruntergezählt und mit Schritt S2 fortgefahren.

Falls die vorgegebene Anzahl der Messschleifen durchlaufen ist, also die Schleifenvariable i auf 0 steht, wird im Schritt S18 verglichen, ob der eingespeicherte Spannungswert M_OLD dem aktuellen gemessenen Spannungswert M(i) entspricht. Falls das Vergleichsergebnis "ja" lautet, was bedeutet, dass der Zustand des kapazitiven Energiespeichers nicht geändert hat, wird die Schleifenvariable i im Schritt S19 (i = 10) wieder zurückgesetzt und ein neuer Überwachungszyklus mit Schritt S2 angestoßen.

Falls das Vergleichsergebnis "nein" lautet, also der aktuell gemessene Spannungswert M(i) nicht dem vorgespeicherten Spannungswert M_OLD der Ladesteuereinrichtung entspricht, wird im Schritt S20 geprüft, ob der aktuelle Spannungswert M(i) größer als der gespeicherte Spannungswert M_OLD ist. Falls das Ergebnis "nein" ist, wird im Schritt S21 vorzugsweise der Statusüberwachungseinrichtung signalisiert, dass der kapazitive Energiespeicher entladen wird. Falls das Ergebnis "ja" ist, d. h. der gemessene Spannungswert über dem eingespeicherten Spannungswert liegt, wird im Schritt S22 ein Ladevorgang angezeigt.

Nach Schritt S21 bzw. Schritt S22 wird in Schritt S23 der eingespeicherte Spannungswert der Ladesteuereinrichtung auf den aktuell gemessenen Spannungswert gesetzt und dann mit Schritt S19 fortgefahren, bei dem die Anzahl der Messschleifen wieder auf 10, also zurückgesetzt wird.

Mit dem anhand Figur 2 dargestellten Funktionsüberwachungsschema der Ladesteuereinrichtung lässt sich eine einfache und zuverlässige Überwachung des kapazitiven Energiespeichers durchführen. Mit der erfindungsgemäßen Schaltung zur unterbrechungsfreien Stromversorgung bzw. dem vorgestellten Betrieb dieser Schaltung wird für eine sichere und reaktionsschnelle Überbrückung einer Unterbrechung in der regulären Energieversorgung von Lasten gesorgt. Die Schaltung lässt sich dabei einfach und flexibel an Versorgungsspannungen, gewünschte Haltezeiten und Kommunikationsprotokolle der angeschlossenen, mit Energie zu versorgenden Lasten anpassen.

## Patentansprüche

1. Schaltung (5) zur unterbrechungsfreien Stromversorgung, die mit einer Energieeinspeisung (2) und einer Last (3) verbindbar ist, und
einen kapazitiven Energiespeicher (52),
einen mit der Energieeinspeisung (2) und der Last (3) verbindbaren Umschalter (51), der mit dem kapazitiven Energiespeicher (52) verbunden und ausgelegt ist, von einem Versorgen der Last mit Energie über die Energieeinspeisung auf ein Versorgen der Last mit Energie aus dem kapazitiven Energiespeicher umzuschalten, wenn bei einer über die Energieeinspeisung angelegten Spannung ein erster vorbestimmter Spannungsabfall auftritt,
eine mit der Energieeinspeisung (2) verbindbare Ladeeinrichtung (53), die mit dem kapazitiven Energiespeicher verbunden und ausgelegt ist, den kapazitiven Energiespeicher zu laden, eine mit dem kapazitiven Energiespeicher (52) und der Ladeeinrichtung (53) verbundene Ladesteuereinrichtung (57), die ausgelegt ist, den kapazitiven Energiespeicher durch Auswerten einer Spannung des kapazitiven Energiespeichers zu überwachen,
eine mit der Energieeinspeisung verbindbare Spannungsüberwachungseinrichtung (55), die ausgelegt ist, zu ermitteln und in Form eines Fehlersignals zu signalisieren, wenn bei der über die Energieeinspeisung angelegten Spannung ein zweiter vorbestimmter Spannungsabfall auftritt, der kleiner als der erste vorbestimmte Spannungsabfall ist, und
eine zwischen den kapazitiven Energiespeicher (52) und den Umschalter (51) geschaltete Entladeeinrichtung (54), die ausgelegt ist, dem Umschalter (51) die zum Versorgen der Last (3) notwendige Energie durch Entladen des kapazitiven Energiespeichers zur Verfügung zu stellen,
aufweist
**dadurch gekennzeichnet,**
**dass** die Ladesteuereinrichtung (57) ausgelegt ist, die Ladeeinrichtung (53) bei Feststellen eines Fehlers durch das Auswerten der Spannung des kapazitiven Energiespeichers abzuschalten, und
**dass** die Entladeeinrichtung (54) mit der Spannungsüberwachungseinrichtung (55) verbunden ist, wobei die Entladeeinrichtung (54) ausgelegt ist, bei Anliegen des Fehlersignals der Spannungsüberwachungseinrichtung von einem Stand-by-Modus oder Aus-Modus in einen Aktiv-Modus hochzuschalten.

2. Schaltung nach Anspruch 1, wobei der kapazitive Energiespeicher (52) mehrere Speicherzellen (521) und eine zwischen Ladeeinrichtung (53) und Speicherzellen geschaltete Ausgleichschaltung (522) zum gleichmäßigen Laden der Speicherzellen aufweist, wobei die Ladesteuereinrichtung (57) die Spannungen der einzelnen Speicherelemente vergleicht, um bei Feststellen eines zu starken Abweichens die Ladeeinrichtung abzuschalten.

3. Schaltung nach Anspruch 2, wobei eine Tauschschaltung (523) vorgesehen ist, um Speicherzellen zu- oder abzuschalten.

4. Schaltung nach einem der Ansprüche 1 bis 3, wobei die Ladesteuereinrichtung (57) die Spannung des kapazitiven Energiespeichers (52) mit einer Versorgungsspannung der Ladesteuereinrichtung vergleicht, um den Ladezustand des kapazitiven Energiespeichers zu ermitteln.

5. Schaltung nach einem der Ansprüche 1 bis 4, wobei die Ladeeinrichtung (53) eine Strom-und Spannungsbegrenzer (532) und/oder einen Leistungsaufnahmebegrenzer (533) aufweist.

6. Schaltung nach einem der Ansprüche 1 bis 5, wobei die Ladeeinrichtung (53) eine Blockiereinrichtung (531) zum Verhindern einer Rückspeisung von Energie in die Energieeinspeisung (2) aufweist.

7. Schaltung nach einem der Ansprüche 1 bis 6, wobei die Entladeeinrichtung (54) als Spannungswandler zum Anpassen der von dem kapazitiven Energiespeicher (52) gelieferten Spannung an die Versorgungsspannung der Last (3) ausgelegt ist.

8. Schaltung nach einem der Ansprüche 1 bis 7, wobei der Umschalter (51) eine Blockiereinrichtung (513) zum Verhindern einer Einspeisung von Energie aus dem kapazitiven Energiespeicher (52) in die Energieeinspeisung (2) aufweist.

9. Schaltung nach einem der Ansprüche 1 bis 8, mit einer mit der Spannungsüberwachungseinrichtung (55) verbundenen Statusüberwachungseinrichtung (56), die ausgelegt ist, bei Anliegen des Fehlersignals der Spannungsüberwachungseinrichtung Komponenten der Last auszuschalten und/oder Information über die Schaltung zur Verfügung zu stellen.

10. Hauptplatine (1) mit einem Netzteil (2), einem Hauptprozessor (3) und einer zwischen dem Netzteil und dem Hauptprozessor angeordneten Schaltung (5) nach einem der Ansprüche 1 bis9, wobei das Netzteil als Energieeinspeisung (2) und der Hauptprozessor (3) als Last (3) dient.

11. Verfahren zur unterbrechungsfreien Stromversorgung einer Last (3),
wobei ein mit einer Energieeinspeisung (2) verbundener kapazitiver Energiespeicher (52) geladen und das Laden des kapazitiven Energiespeicher durch Auswerten einer Spannung des kapazitiven Energiespeichers überwacht wird,
wobei ein Umschalter (51) von einem Versorgen der Last (3) mit Energie über die Energieeinspeisung (2) auf ein Versorgen der Last mit Energie aus dem kapazitiven Energiespeicher (52) umschaltet, wenn bei einer über die Energieeinspeisung angelegten Spannung ein erster vorbestimmter Spannungsabfall auftritt, wobei eine Entladeeinrichtung (54) dem Umschalter die zum Versorgen der Last notwendige Energie durch Entladen des kapazitiven Energiespeichers zur Verfügung stellt,
wobei, wenn bei einer über die Energieeinspeisung (2) angelegten Spannung ein zweiter vorbestimmter Spannungsabfall auftritt, der kleiner als der erste vorbestimmte Spannungsabfall ist, ein Fehlersignal ausgeben wird,
**dadurch gekennzeichnet,**
**dass** bei Feststellen eines Fehlers durch das Auswerten der Spannung des kapazitiven Energiespeichers (52) das Laden des kapazitiven Energiespeicher abgebrochen wird, und
**dass** bei Anliegen des Fehlersignals die Entladeeinrichtung (54) von einem Stand-by-Modus oder Aus-Modus in einen Aktiv-Modus hochschaltet.

12. Verfahren nach Anspruch 11, wobei der kapazitive Energiespeicher (52) mehrere Speicherzellen (521) aufweist, wobei die Spannungen der einzelnen Speicherelemente beim Laden verglichen werden, um bei Feststellen eines zu starken Abweichens den Ladevorgang abzuschalten.

13. Verfahren nach Anspruch 12, wobei Speicherzellen (521) zu- oder abgeschaltet werden können.

14. Verfahren nach einem der Ansprüche 11 bis 13, wobei, wenn in der über die Energieeinspeisung (2) angelegte Spannung der erste vorbestimmte Spannungsabfall auftritt, Komponenten der Last (3) ausgeschaltet und/oder Information über die Energieeinspeisung aus dem kapazitiven Energiespeicher (52) zur Verfügung gestellt werden.

## Claims

1. Circuit (5) for uninterruptible power supply, which can be connected to an energy supply (2) and a load (3), and comprises
a capacitive energy store (52),
a changeover switch (51) connectable to the energy supply (2) and the load (3), said changeover switch being connected to the capacitive energy store (52) and designed to change over from supplying the load with energy via the energy supply to supplying the load with energy from the capacitive energy store if a first predetermined voltage drop occurs when a voltage is applied via the energy supply,
a charging device (53) connectable to the energy supply (2), said charging device being connected to the capacitive energy store and designed to charge the capacitive energy store,
a charging control device (57) connected to the capacitive energy store (52) and the charging device (53), said charging control device being designed to monitor the capacitive energy store by evaluating a voltage of the capacitive energy store,
a voltage monitoring device (55) connectable to the energy supply, said voltage monitoring device being designed to determine and signal in the form of a fault signal if a second predetermined voltage drop occurs when the voltage is applied via the energy supply, said second predetermined voltage drop being less than the first predetermined voltage drop and
a discharge device (54) connected between the capacitive energy store (52) and the changeover switch (51), said discharge device being designed, to make available to the changeover switch (51) the energy required for supplying the load (3) by means of discharging the capacitive energy store,
**characterized in that** the charging control device (57) is designed to switch off the charging device (53) when a fault is ascertained by evaluating the voltage of the capacitive energy store, and
**in that** the discharge device (54) is connected to the voltage monitoring device (55), wherein the discharge device (54) is designed, when the fault signal of the voltage monitoring device is present, to switch up to an active mode from a standby mode or off mode.

2. Circuit according to Claim 1, wherein the capacitive energy store (52) comprises a plurality of storage cells (521) and a compensation circuit (522) connected between the charging device (53) and storage cells and serving for uniformly charging the storage cells, wherein the charging control device (57) compares the voltages of the individual storage elements in order to switch off the charging device when an excessively great deviation is ascertained.

3. Circuit according to Claim 2, wherein an exchange circuit (523) is provided for switching storage cells on or off.

4. Circuit according to any of Claims 1 to 3, wherein the charging control device (57) compares the voltage of the capacitive energy store (52) with a supply voltage of the charging control device in order to determine the charge state of the capacitive energy store.

5. Circuit according to any of Claims 1 to 4, wherein the charging device (53) has a current and voltage limiter (532) and/or a power consumption limiter (533).

6. Circuit according to any of Claims 1 to 5, wherein the charging device (53) has a blocking device (531) for preventing a feedback of energy into the energy supply (2).

7. Circuit according to any of Claims 1 to 6, wherein the discharge device (54) is designed as a voltage converter for adapting the voltage supplied by the capacitive energy store (52) to the supply voltage of the load (3).

8. Circuit according to any of Claims 1 to 7, wherein the changeover switch (51) has a blocking device (513) for preventing a supply of energy from the capacitive energy store (52) into the energy supply (2).

9. Circuit according to any of Claims 1 to 8, comprising a status monitoring device (56) connected to the voltage monitoring device (55), said status monitoring device being designed, when the fault signal of the voltage monitoring device is present, to switch off components of the load and/or to provide information about the circuit.

10. Motherboard (1) comprising a power supply unit (2), a main processor (3) and a circuit (5) according to any of Claims 1 to 9 arranged between the power supply unit and the main processor, wherein the power supply unit serves as energy supply (2) and the main processor (3) serves as load (3).

11. Method for the uninterruptible power supply of a load (3),
wherein a capacitive energy store (52) connected to an energy supply (2) is charged and the charging of the capacitive energy store is monitored by the evaluation of a voltage of the capacitive energy store,
wherein a changeover switch (51) changes over from supplying the load (3) with energy via the energy supply (2) to supplying the load with energy from the capacitive energy store (52) if a first predetermined voltage drop occurs when a voltage is applied via the energy supply, wherein a discharge device (54) makes available to the changeover switch the energy required for supplying the load by the discharging of the capacitive energy store,
wherein, if a second predetermined voltage drop occurs when a voltage is applied via the energy supply (2), said second predetermined voltage drop being less than the first predetermined voltage drop, a fault signal is output,
**characterized in that** the charging of the capacitive energy store is terminated when a fault is ascertained by the evaluation of the voltage of the capacitive energy store (52) and **in that**, when the fault signal is present, the discharge device (54) switches up to an active mode from a standby mode or off mode.

12. Method according to Claim 11, wherein the capacitive energy store (52) has a plurality of storage cells (521), wherein the voltages of the individual storage elements are compared during charging in order to switch off the charging process when an excessively great deviation is ascertained.

13. Method according to Claim 12, wherein storage cells (521) can be switched on or off.

14. Method according to any of Claims 11 to 13, wherein, if the first predetermined voltage drop occurs in the voltage applied via the energy supply (2), components of the load (3) are switched off and/or information about the energy supply from the capacitive energy store (52) is made available.

## Revendications

1. Circuit (5) d'alimentation en courant protégée contre les interruptions, le circuit pouvant être raccordé à une alimentation en énergie (2) et à une charge (3) et présentant
un accumulateur capacitif d'énergie (52),
un commutateur (51) qui peut être raccordé à l'alimentation en énergie (2) et à la charge (3), relié à l'accumulateur capacitif d'énergie (52) et conçu pour commuter d'une alimentation de la charge en énergie par l'intermédiaire de l'injection d'énergie à une alimentation de la charge par de l'énergie provenant de l'accumulateur capacitif d'énergie si une première chute de tension prédéterminée survient sur une tension appliquée par l'intermédiaire de l'injection d'énergie,
un dispositif de chargement (53) apte à être raccordé à l'injection d'énergie (2) et raccordé à l'accumulateur capacitif d'énergie et conçu pour charger l'accumulateur capacitif d'énergie,
un dispositif (57) de commande de chargement raccordé à l'accumulateur capacitif d'énergie (52) et au dispositif de chargement (53) et conçu pour surveiller l'accumulateur capacitif d'énergie par évaluation de la tension de l'accumulateur capacitif d'énergie,
un dispositif (55) de surveillance de la tension apte à être raccordé à l'injection d'énergie et conçu pour déterminer et signaler sous la forme d'un signal de défaut qu'une deuxième chute de tension prédéterminée est survenue sur la tension appliquée par l'intermédiaire de l'injection d'énergie, la deuxième chute de tension étant inférieure à la première chute de tension prédéterminée et
un dispositif de décharge (54) raccordé entre l'accumulateur capacitif d'énergie (52) et le commutateur (51) et conçu pour fournir au commutateur (51) l'énergie nécessaire pour l'alimentation de la charge (3) par décharge de l'accumulateur capacitif d'énergie,
**caractérisé en ce que**
le dispositif (57) de commande de chargement est conçu pour débrancher le dispositif de chargement (53) lorsqu'un défaut est constaté par évaluation de la tension de l'accumulateur capacitif d'énergie,
**en ce que** le dispositif de décharge (54) est raccordé au dispositif (55) de surveillance de tension, **en ce que** le dispositif de décharge (54) est conçu pour basculer d'un mode d'attente ou d'un mode arrêt en un mode actif lorsque le signal de défaut du dispositif de surveillance de tension est présent.

2. Circuit selon la revendication 1, dans lequel l'accumulateur capacitif d'énergie (52) présente plusieurs cellules d'accumulateur (521) et un circuit de compensation (522) raccordé entre le dispositif de chargement (53) et les cellules d'accumulateur pour charger uniformément les cellules d'accumulateur, le dispositif (57) de commande de chargement comparant les tensions des différents éléments d'accumulateur pour débrancher le dispositif de chargement lorsqu'un écart important est constaté.

3. Circuit selon la revendication 2, dans lequel un circuit de remplacement (523) est prévu pour brancher ou débrancher des cellules d'accumulateur.

4. Circuit selon l'une des revendications 1 à 3, dans lequel le dispositif (57) de commande de chargement compare la tension de l'accumulateur capacitif d'énergie (52) à une tension d'alimentation du dispositif de commande de chargement pour déterminer l'état de charge de l'accumulateur capacitif d'énergie.

5. Circuit selon l'une des revendications 1 à 4, dans lequel le dispositif de chargement (53) présente un limiteur de courant et de tension (532) et/ou un limiteur (533) de reprise de puissance.

6. Circuit selon l'une des revendications 1 à 5, dans lequel le dispositif de chargement (53) présente un dispositif de blocage (531) qui empêche un renvoi d'énergie dans l'injection d'énergie (2).

7. Circuit selon l'une des revendications 1 à 6, dans lequel le dispositif de décharge (54) est conçu comme convertisseur de tension qui adapte la tension délivrée par l'accumulateur capacitif d'énergie (52) à la tension d'alimentation de la charge (3).

8. Circuit selon l'une des revendications 1 à 7, dans lequel le commutateur (51) présente un dispositif de blocage (513) qui empêche l'injection d'énergie depuis l'accumulateur capacitif d'énergie (52) jusque dans l'injection d'énergie (2).

9. Circuit selon l'une des revendications 1 à 8, doté d'un dispositif (56) de surveillance d'état raccordé au dispositif (55) de surveillance de tension et conçu pour débrancher des composants de la charge et/ou délivrer des informations sur le circuit en cas de présence du signal de défaut du dispositif de surveillance de tension.

10. Carte principale de circuit (1) dotée d'une partie réseau (2), d'un processeur principal (3) et d'un circuit (5) selon l'une des revendications 1 à 9 disposée entre la partie réseau et le processeur principal, la partie réseau servant d'alimentation en énergie (2) et le processeur principal (3) de charge (3).

11. Procédé d'alimentation en énergie protégée contre les interruptions d'une charge (3), dans lequel
un accumulateur capacitif d'énergie (52) raccordé à une injection d'énergie (2) est chargé et la charge de l'accumulateur capacitif d'énergie est surveillée par évaluation d'une tension de l'accumulateur capacitif d'énergie,
un commutateur (51) commute depuis une alimentation de la charge (3) par de l'énergie provenant de l'injection d'énergie (2) à une alimentation de la charge par une énergie provenant de l'accumulateur capacitif d'énergie (52) lorsqu'une première chute de tension prédéterminée survient sur une tension appliquée par l'intermédiaire de l'injection d'énergie, un dispositif de décharge (54) fournissant au commutateur l'énergie nécessaire pour alimenter la charge par décharge de l'accumulateur capacitif d'énergie,
un signal de défaut est délivré si une tension appliquée par l'intermédiaire de l'injection d'énergie (2) subit une deuxième chute de tension prédéterminée plus petite que la première chute de tension prédéterminée,
**caractérisé en ce que**
lorsqu'un défaut est constaté par évaluation de la tension de l'accumulateur capacitif d'énergie (52), le chargement de l'accumulateur capacitif d'énergie est interrompu et
lorsqu'un signal de défaut est présent, le dispositif de décharge (54) bascule d'un mode d'attente ou d'un mode arrêt en un mode actif.

12. Procédé selon la revendication 11, dans lequel l'accumulateur capacitif d'énergie (52) présente plusieurs cellules d'accumulateur (521), les tensions des différents éléments d'accumulateur étant comparées lors du chargement charge pour interrompre l'opération de chargement en cas de constatation d'un écart trop important.

13. Procédé selon la revendication 12, dans lequel des cellules d'accumulateur (521) peuvent être branchées ou débranchées.

14. Procédé selon l'une des revendications 11 à 13, dans lequel, si la première chute de tension prédéterminée survient sur la tension appliquée par l'intermédiaire de l'injection d'énergie (2), des composants de la charge (3) sont débranchés et/ou une information concernant l'injection d'énergie par l'accumulateur capacitif d'énergie (52) est délivrée.
